(19) **Europäisches Patentamt / European Patent Office / Office européen des brevets**

(11) **EP 2 419 722 B1**

(12) # EUROPEAN PATENT SPECIFICATION

(45) Date of publication and mention
of the grant of the patent:
**02.10.2019 Bulletin 2019/40**

(51) Int Cl.:
***G01N 29/032*** *(2006.01)*          ***G01N 29/22*** *(2006.01)*
***G10K 11/00*** *(2006.01)*

(21) Application number: **09808996.4**

(22) Date of filing: **31.12.2009**

(86) International application number:
**PCT/EP2009/068055**

(87) International publication number:
**WO 2010/118793 (21.10.2010 Gazette 2010/42)**

(54) **METHOD AND APPARATUS FOR INVESTIGATING A FLEXIBLE HOLLOW ELEMENT USING ACOUSTIC SENSORS**

VERFAHREN UND VORRICHTUNG ZUR UNTERSUCHUNG EINES FLEXIBLEN HOHLELEMENTS UNTER VERWENDUNG AKUSTISCHER SENSOREN

PROCÉDÉ ET APPAREIL PERMETTANT D'ANALYSER UN ÉLÉMENT CREUX SOUPLE AU MOYEN DE DÉTECTEURS ACOUSTIQUES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **14.04.2009   DE 102009017018**
**15.09.2009   EP 09075426**
**22.09.2009   PCT/EP2009/062265**

(43) Date of publication of application:
**22.02.2012   Bulletin 2012/08**

(73) Proprietor: **Hochschule für angewandte Wissenschaften**
**Fachhochschule Coburg**
**96450 Coburg (DE)**

(72) Inventors:
• **LINDNER, Gerhard**
  **96450 Coburg (DE)**
• **STICH, Sebastian**
  **92318 Neumarkt i.d.OPf (DE)**
• **SCHMIDT, Katrin**
  **96523 Steinach (DE)**

• **KREMPEL, Sandro**
  **96515 Judenbach (DE)**
• **SCHLEMMER, Josefine**
  **96486 Lautertal (DE)**
• **SCHMITT, Martin**
  **96110 Scheßlitz (DE)**

(74) Representative: **Maikowski & Ninnemann**
**Patentanwälte Partnerschaft mbB**
**Postfach 15 09 20**
**10671 Berlin (DE)**

(56) References cited:
**WO-A2-2007/029143     WO-A2-2008/034878**
**US-A- 5 092 176         US-A1- 2003 010 125**
**US-A1- 2003 033 870     US-A1- 2008 163 700**

• **Thomas R Hay ET AL: "Fouling detection in the food industry using ultrasonic guided waves", Food control, vol. 14, no. 7, 4 March 2003 (2003-03-04), pages 481-488, XP055510445, DOI: 10.1016/S0956-7135(02)00107-X**

## Description

The invention relates to a sensor device for investigating a flexible hollow element having an inner surface for interfacing a liquid or a soft medium according to claim 1. Further, the invention relates to a method for investigating a flexible hollow element having an interface for interfacing a liquid or a soft medium according to claim 13.

Technical devices often contain flexible hollow elements in the form of conducts or pipes for guiding a liquid (such as, for example, cooling water) or a soft medium such as (biological) tissues or gels. In order to secure a trouble-free operation of the technical device it is desirable to be able to get comprehensive information about the state of the flexible hollow element. In particular, it is desirable to get information about the presence of a coating on an inner surface of the flexible hollow element, which might reduce the effective inner diameter of the hollow element. A coating on the inner surface of the hollow element may be, for example, a biological, a polymer or a limescale ($CaCO_3$) deposit.

It is known to use optical methods in order to investigate deposits on an inner surface of a conduct. However, these methods could only be employed if the conduct to be investigated possesses sufficient transparency with respect to the used wavelength.

Document WO 2007/029143 A2 discloses a method and a device for monitoring the formation and removal of biofilms in ducts using vibrations, wherein an element for generating vibrations in the duct and a sensor for sensing the vibrations are provided.

Further, US 2008/0163700 A1 describes a method for pipeline monitoring using Doppler sensors. US 5 092 176 A discloses a method of determining deposits in a boiler tube using ultrasonic waves. A method for analyzing a layer on an inner surface of a fluid container using acoustic waves is further disclosed in US 2003/0010125 A1.

It is an object of the invention to provide a sensor device and a method that allow the investigation of a greater variety of flexible hollow elements.

According to the invention, a sensor device for investigating a flexible hollow element having an inner surface for interfacing a liquid or a soft medium is provided, the sensor device comprising:

- a support to be attached to the flexible hollow element;
- attachment means for attaching the support to the flexible hollow element;
- at least one transmitter arranged on the support for exciting acoustic waves in the support;
- at least one receiver arranged on the support for receiving acoustic waves evoked by the transmitter, wherein
- a signal generated by the receiver upon receipt of acoustic waves evoked by the transmitter can be evaluated to verify whether a coating is present on the inner surface of the hollow element and/or if a coating is present to determine properties of the coating, wherein

- the attachment means are configured to allow a force and/or a form closed connection of the support to the flexible hollow element, wherein
- the transmitter is configured to excite Lamb waves or Lamb-Rayleigh waves in the support, and wherein
- the transmitter and the receiver are arranged in a distance from one another with respect to the main extension direction of the support.

The sensor device according to the invention is based on the fact that when the support is brought into contact with the flexible hollow element to be investigated and acoustic waves are excited in the support the properties of the acoustic waves arriving at the receiver depend on whether or not a coating is present on an inner surface of the flexible hollow element and - if a coating is present - the properties of the acoustic waves detected by the receiver depend on the properties of the coating. For example, the amplitude of the acoustic waves received by the receiver depends on the thickness of the coating.

The attachment means allow the support, i.e. the whole sensor device, to be detachably fixed to the flexible hollow element. The flexible hollow element is, for example, a flexible tube. The term "flexible" in particular means that the flexible hollow element may be bent without causing a plastic deformation of the hollow element. For example, the flexible hollow element consists of a material (e.g., plastic, rubber or silicon) that under normal conditions has a lower stiffness than metal. However, the sensor device could, of course, also be used for investigating flexible metal hollow elements such as corrugated metal tubes.

The acoustic waves arriving at the receiver may comprise two basic fractions: The first fraction consists of acoustic waves generated by the transmitter in the support which travel directly from the transmitter to the receiver within the support. The other fraction consists of acoustic waves that are generated by mode conversion, wherein a part of the acoustic waves excited in the support is converted into acoustic waves in a side wall of the flexible hollow element and also - when a medium is present at the inner surface of the hollow element - in volume sound waves in the medium. Acoustic waves created in the medium may propagate towards the receiver, wherein they may be reflected by other portions of the support before they arrive at the receiver. The sound waves created in the medium are re-converted into acoustic waves propagating in the support which are then detected by the receiver.

It is noted that the term "acoustic waves evoked by the transmitter" refers to both the acoustic waves excited in the support and travelling directly to the receiver and volume sound waves in the medium created by mode conversion which are reconverted before being detected by the receiver.

The sensor device according to the invention may also comprise evaluation means configured and constructed for evaluating a signal generated by the receiver upon receipt of acoustic waves evoked by the transmitter and for verifying whether a coating is present between the inner surface of the flexible hollow element and the medium and/or if a coating is present for determining properties of the coating.

The evaluation means might for example be implemented as an electrical circuit, e.g. in the form of a microchip. The microchip may be arranged on the support or on another part of the sensor device. However, it is also conceivable that the evaluation means are not realized in form of an integrated circuit but comprise a measurement device arranged separately to the support. In particular, the measurement device (such as an oscilloscope or a computer) is connected to the receiver in order to register the electrical receiver signals. Further, a computer program can be used to evaluate the receiver signals registered by the measurement device.

The transmitter is configured to excite surface acoustic waves in the form of Lamb waves or Lamb-Rayleigh waves in the support. For this, the thickness of the support and the frequency of the excited waves in the support are such that concurrent surface acoustic waves are propagating on both a first side and a second side of the support, wherein the first side faces towards the flexible hollow element and the second side faces away from the flexible hollow element when the support is mounted to the flexible hollow element. For example, the thickness of the support is in the range between 0.1 mm to 10 mm, in particular in the range between 0.5 mm to 2 mm. The excitation frequency is, for example, in the range between 200 kHz and 5 MHz, in particular between 500 kHz and 1.5 MHz.

The transmitter and/or the receiver may be an interdigital transducer. However, the term "transmitter" is not restricted to a piezo-electric transducer. Other embodiments of the invention comprise a transmitter in the form of a (e.g. pulsed) laser that excites the acoustic wave in the support based on thermoelastic effects and/or a receiver in the form of an optical displacement detector such as a laser-doppler-vibrometer. Also, a wedge ("wedge converter") could be used to excite the acoustic waves or a comb-like vibrator ("comb converter"), wherein the wedge converter and/or the comb converter may be used in combination with a piezo-electric transducer. Of course different transmitter types could also be used in combination.

Further, reflecting means can be provided for reflecting acoustic waves generated by the transmitter. In particular, the transmitter and the receiver are arranged with respect to the reflecting means in such a way that acoustic waves excited in the support by the transmitter are at least partially reflected by the reflecting means towards the receiver.

Further, if a combined transmitter/receiver device, i.e. a single device which is used as transmitter as well as receiver, is employed the transmitter/receiver device may be operated for a first period of time as a transmitter generating an acoustic wave pulse, and, for a second period of time, as a receiver receiving the acoustic wave pulse generated by the transmitter/receiver device during the first period of time and reflected by the reflecting means.

For example, the reflecting means comprise an edge of the substrate. However, the reflecting means may also comprise or consist of structures that were added to the support such as, for example, at least one groove (generated e.g. by etching or mechanical processing of the support) or at least one elevation (generating e.g. by adding a material layer to the support and processing of the material layer).

When Lamb waves or Lamb-Rayleigh waves are excited in the support the displacement of the first and the second surface of the support is correlated such that, in particular, the amplitude and/or the phases of the displacement movement of the first and the second surface of the support are interrelated. In the case of Lamb-Rayleigh waves acoustic waves in the transition regime between Lamb and Rayleigh waves are excited in the support.

Lamb or Lamb-Rayleigh waves excited in the support may be converted into volume sound waves in the medium conducted in the flexible hollow element as set forth above. In particular, volume sound waves are coupled into the medium under an angle $\phi$ with respect to a reference line oriented perpendicular to the inner surface of the flexible hollow element. The angle $\phi$ on the one hand depends on the Rayleigh angle $\theta$, which in turn depends on the velocity $c_h$ of sound waves within the side wall of the flexible hollow element and the velocity of sound $c_S$ of the surface acoustic waves propagating along the support, wherein

$$\theta = \arcsin(c_h/c_S).$$

On the other hand, the angle $\phi$ depends on the angle of refraction between the acoustic waves in the flexible hollow element and sound wave in the medium. In order to allow mode conversion between the support and the side wall of the flexible hollow element, the sensor device according to the invention will be preferably used if the velocity of sound in the material of the side wall of the flexible hollow element is smaller than the velocity of sound in the material of the support.

As the propagation of acoustic waves into the medium depends on the properties of the interface between a medium and the inner surface of the hollow element, the amplitude of sound waves created in the medium and the angle $\phi$ under which the sound waves are emitted into the medium will be affected by the presence and the properties of a coating on the inner surface of the flexible hollow element. Therefore, a receiver signal related to acoustic waves created in the medium will be altered when the properties, for example the thickness, of a coating on the inner surface of the flexible hollow element changes.

Thus, monitoring the receiver signal allows monitoring a change of the coating properties in time.

According to an embodiment of the invention, the support is formed in such a way that it at least partially encloses the flexible hollow element when the support is mounted to the flexible hollow element. For example, the support has the shape of a cylinder surface having, for example, a radius that corresponds to the radius of the flexible hollow element.

According to another example of the invention, the support comprises at least one half shell on which the transmitter and/or the receiver is arranged. According to this embodiment the receiver may receive acoustic waves propagating directly from the transmitter to the receiver in the support as well as acoustic waves that are converted into sound waves in the medium and are reflected by another portion of the support (or some other portion of the sensor device or the flexible hollow element) which are then reconverted into acoustic waves in the support which finally travel towards the receiver.

It is noted that the support does not necessarily have to comprise a bending. It is also possible that the support has the form of a plate, i.e. the form of a flat structure. On the other hand, it is also possible that the support comprises not only a bending in a direction perpendicular to the longitudinal axis of the hollow element, but it may additionally comprise a further bending into a direction parallel to the longitudinal axis of the hollow element or only a bending in that direction (i.e. the support comprises, for example, a non rectangular cross section in a plane that extends parallel to the longitudinal axis of the hollow element, wherein the radius of the bending lies in that plane).

The geometry of the support will be chosen dependent on the properties of the flexible hollow element, wherein the cross section of the flexible hollow element to be investigated does not have to be circular but might have, in principle, any shape. For example, the support and the attachment means of the sensor device according to the invention may also be adapted to be mounted to a flexible hollow element having a rectangular cross section.

According to another example of the invention, the support comprises a first and a second part, wherein the transmitter is arranged on the first part and the receiver is arranged on the second part, and, for example, the first and the second part are separated from one another before the support is mounted to the flexible hollow element.

The first and/or the second part may have the shape of a half shell or another bent structure such as a section of a cylinder surface having, for example, a radius that corresponds to the outer dimensions (e.g. the outer diameter) of the flexible hollow element. It is, however, also possible that the first and/or the second part have the shape of a plate.

If both the first and the second part are plates the distance between the two plates may be chosen to correspond to the outer dimensions of the flexible hollow element. It is, however, also conceivable that the distance between the two plates is chosen to be smaller than the original outer dimensions of the flexible hollow element such that the flexible hollow element is compressed between the two plates in order to secure a good acoustic contact between the plates and the flexible hollow element.

Using that transmitter-receiver configuration acoustic waves excited in the support are converted into acoustic waves in the side wall material of the flexible hollow element, travel through a coating (if present) on the inner surface of the hollow element and are converted into volume sound waves which travel through the medium contained within the flexible hollow element towards the second support part.

Having travelled through the medium the acoustic waves cross another portion of the coating (located in the region of the second support part), the side wall of the flexible hollow element and are reconverted into surface acoustic waves propagating in the second support part. These reconverted acoustic waves then travel towards the second receiver where they are detected. In other words, the flexible hollow element and a coating on the inner surface of the hollow element will be crossed by acoustic waves evoked by the transmitter a plurality of times. Due to the inherent multiple crossing of the coating a very sensitive detection method can be provided, which, for example, can be considerably more sensitive than known ultrasonic measurements.

It is noted that also repeated mode conversion can occur. For example, a first volume sound wave created by mode conversion of a first (surface) acoustic wave in the support is reconverted into a second acoustic wave in the support. Then, the second acoustic wave is converted again into a second volume sound wave in the medium, which may be reflected and reconverted again into a surface acoustic wave in the support. Of course, also more than two conversion and reconversion processes can occur.

It is also possible that the support comprises a first and a second part (separated before the support is mounted to the flexible hollow element), wherein the transmitter and the receiver are arranged on the first part, i.e. on the same of the two support parts. According to that configuration, a part of the acoustic waves created by the transmitter will travel directly from the transmitter to the receiver in the support, wherein another part of the excited acoustic waves is converted into volume sound waves in the medium which are reflected by the second part back towards the first part. Arriving at the first support part, the reflected sound waves are reconverted into surface acoustic waves in the first support part which propagate towards the receiver where they are detected.

According to another example of the invention, a further receiver is arranged on the first and the second part, respectively, such that a receiver is disposed on any of the support parts. Thus, two different receiver signals can be generated which allows to improve the accuracy of the measurement. In particular, the receiver on the second part may be arranged in a distance with respect to the transmitter (arranged on the first part), the distance between the transmitter and the receiver being contemplated along the main extension direction of the support.

It is, however, not obligatory that the transmitter and the receiver are displaced with respect to a main extension direction of the support (corresponding to the longitudinal axis of the stretched flexible hollow element). Rather, it is also possible that the transmitter and the receiver are not displaced with respect to the longitudinal axis of the flexible hollow element such that when the support is attached to the hollow element both the receiver and the transmitter lie in the same plane spanned by the longitudinal axis and a radial direction of the flexible hollow element.

In particular, the transmitter and the receiver are arranged on a surface of the support that faces away from the flexible hollow element when the support is mounted to the flexible hollow element.

For example, the attachment means comprise at least one fastener for clamping the support to the flexible hollow element, wherein the fastener could be configured to connect two parts of the support in such a way that the two parts adjoin an outer surface of the flexible hollow element and/or at least partially enclose the flexible hollow element. In particular, the fastener has the form of a clamp, wherein for example at least two clamps are used for fixing the support to the flexible hollow element. The fastener in the form of a clamp encloses the support, wherein two endings of the fastener are joined to maintain the clamp position of the fastener. In clamp position the fastener will hold the support in tight contact with the flexible hollow element such that an inner surface of the support bears against the outer surface of the flexible hollow element. For example, the two endings of the clamp fastener are joined together by means of a screw or by latching means.

In another embodiment, the attachment means are not formed as separate parts but are formed integrally with the support. For example, the support comprises two parts, wherein each of the two parts comprises attachment structures that permit a clamping or latching connection between the two support parts. Also, the support may be a single part whose properties (such as its dimensions and the stiffness of its material) are such that it can be clamped to the flexible hollow element. For example, the support has the shape of a tube with a diameter smaller than the outer diameter of the flexible hollow element, wherein the tube comprise a slit along its length axis such that the slit can be widened by bending the tube endings adjacent the slit to allow the flexible hollow element to be inserted into the support.

According to a further example of the invention, the support comprises or consists of a non-piezoelectric material, for example, it consists of at least one of the group of a metal, a glass, a ceramic and a polymer material. For example, the support consists of steel, in particular stainless steel.

The invention also relates to a method for investigating a flexible hollow element, wherein the method comprises the steps of:

     a) arranging a sensor device as describe above on the flexible hollow element, the sensor device comprising a transmitter and a receiver arranged in a distance from one another with respect to the main extension direction of the support;
     b) exciting acoustic waves in the form of Lamb waves or Lamb-Rayleigh waves in the support using the transmitter;
     c) receiving acoustic waves evoked by the transmitter by the receiver;
     d) evaluating a signal generated by the receiver upon receipt of acoustic waves evoked by the transmitter in order to verify whether a coating is present on an inner surface of the hollow element and/or if a coating is present to determine properties of the coating.

The method may also comprise (if a medium in fact interfaces the inner surface of the flexible hollow element) the steps of:

-    converting at least a part of the energy associated with the acoustic waves excited in the support into volume sound waves of the medium interfacing the inner surface of the flexible hollow element; and
-    reconverting at least a part of the energy associated with the volume sound waves into acoustic wave energy of the support thereby generating acoustic waves in the support,

Evaluating the signal generated by the receiver upon receipt of the acoustic waves, for example, comprises evaluating a first signal generated by the receiver at a first point in time and evaluating a second signal generated by the receiver at a second point in time. Of course, more than two signals generated at more than two points in time can be evaluated such that the coating can be monitored continuously (or at least quasi-continuously).

Also, evaluating the signal generated by the receiver can comprise evaluating the amplitude and the time response (transmission time) of the signal. For example, the transmitter excites pulsed acoustic waves in the support which have a certain propagation time from the transmitter to the receiver (depending on the path they take between the transmitter and the receiver). Modifications at the interfaces between the medium, the flexible hollow element and the support might influence the transmission time (i.e. the time a wave front or an acoustic pulse needs to run from the transmitter to the receiver) of the acoustic waves. Thus, evaluating changes of the transmission time allows the determination of properties of a coating or a verification of whether or not a coating is present at the inner surface of the flexible hollow element.

Furthermore, the mode conversion, i.e. the conversion of acoustic waves in the support into sound waves in the medium interfacing the inner surface of the flexible hollow element, depends on the presence of a coating and the properties of the coating, respectively. Thus, a first signal may be generated by the receiver upon receiving acoustic waves transmitted directly from the transmitter via the support and a second signal may be generated resulting from volume acoustic sound waves in the medium induced by the acoustic waves in the support and being received by the receiver, wherein both the first and the second signal depend on the properties of a coating at the interface.

Further, for example, evaluating the signal generated by the receiver comprises comparing the results of the evaluation with pre-determined values. In particular, the amplitude and/or the time response of the receiver signal are compared to pre-determined amplitude and/or time response values. The pre-determined values may be generated using a similar flexible hollow element which is similar or identical to the flexible hollow element to be investigated (e.g., the flexible hollow element itself), wherein a coating was deposited whose properties or at least some of its properties are known. Also, the pre-determined values could be determined using a similar flexible hollow element (or again the flexible hollow element to be investigated itself) without a coating to obtain reference values for a non-coated structure. In other words, the sensor device is calibrated before it is used to investigate the flexible hollow element. Variations from the calibration values indicate the presence of a coating or permit to determine a change of the properties of the coating.

It is also possible to derive properties of a coating on the inner surface of the flexible hollow element by simulating the interfaces between the medium and the coating, between the coating and the flexible hollow element and between the flexible hollow element and the support. The simulation may contain different unknown parameters related to coating properties (e.g. its thickness) which are to be determined by means of values extracted from the receiver signals (such as values related to the amplitude and the time response of the signals).

For example, a four phase model could be used to simulate the support, a side wall of the flexible hollow element, a coating and the medium conducted by the flexible hollow element, wherein certain properties (for example, material parameters of the support, the side wall of the flexible hollow element, the coating and the medium) are assumed to be known. Other parameters of the model are unknown and are to be determined using the evaluated receiver signals. For example, such unknown parameters comprise the thickness of the coating or, in particular, a coating thickness function depending on the position on the inner surface of the flexible hollow element. Also, more complicated simulations could be used, which, for example, allow to determine properties of inhomogeneously formed coatings.

The embodiments of the invention will be described in more detail hereinafter with reference to the drawings, in which:

Fig. 1      illustrates a sectional view of a sensor device according to a first embodiment of the invention;

Fig. 2      illustrates a sectional view of a sensor device according to a second embodiment of the invention;

Fig. 3      illustrates a sectional view of a sensor device according to a third embodiment of the invention;

Fig. 4      illustrates the dependence of a signal generated by the first and the second receiver of a sensor device according to the invention on the thickness of a coating;

Fig. 5      illustrates the time dependence of receiver signals measured with and without a coating on an inner surface of the flexible hollow element;

Fig. 6A      depicts a sectional view of a sensor device according to the second embodiment of the invention, wherein no medium is present within the flexible hollow element;

Fig. 6B      illustrates a typical receiver signal for the configuration of Fig. 6A;

Fig. 7A      depicts a sectional view of the sensor device of Fig. 6A, wherein a liquid medium flows through the flexible hollow element;

Fig. 7B      illustrates a typical receiver signal for the configuration of Fig. 7A;

Fig. 8A-D      illustrate receiver signals for the configuration of Fig. 7A, if a coating is present on the inner surface of the flexible hollow element;

Fig. 9A-D      illustrate evaluation results obtained from the signal of the first receiver of the sensor of Fig. 7A; and

Fig. 10A-D     illustrate evaluation results obtained from the signal of the second receiver of the sensor of Fig. 7A.

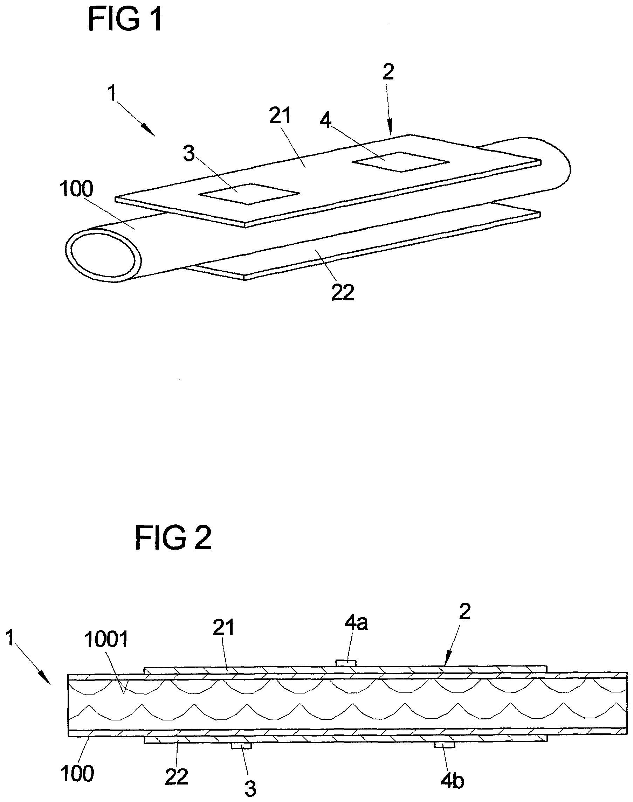

Figure 1 depicts a sensor device 1 according to a first embodiment of the invention, the sensor device 1 comprising a support 2 which consists of a first and a second part in the form of a first and a second rectangular plate 21, 22.

The plates 21, 22 are attached to a flexible hollow element in the form of a flexible tube 100. In particular, the plates are arranged in such a way that their longer sides extend along the longitudinal axis of the flexible hollow element 100 (in its stretched stage as shown in Fig. 1) such that a portion of the first and the second plate 21, 22 is in mechanical (and thus acoustical) contact with an outer surface of the flexible hollow element 100. The distance of the attached plates is chosen in such a way that it is smaller than the original diameter of the flexible tube such that the flexible tube is compressed between the plates 21, 22 to some extent. This increases the contact area between the outer surface of the tube 100 and the inner surface of the plates 21, 22. For example, the flexible tube has a diameter of about 1 cm and a side wall thickness of about 2 mm. The support parts may have a thickness of about 1 mm.

A transmitter 3 is arranged on an outer surface (which faces away from the flexible element 100) of plate 21. On the same plate 21 a receiver 4 is arranged such that the transmitter 3 and the receiver 4 are disposed in a row along the main extension direction of plate 21, the main extension direction being orientated parallel to the longitudinal axis of the flexible tube 100.

The transmitter 3 excites acoustic waves in the plate 21 which partially propagate towards the receiver 4 in the plate 21. However, the acoustic waves excited in the plate 21 are at least partially converted into sound waves in a medium flowing inside the flexible tube 100. These volume sound waves are at least partially reflected by the other plate 22 and are reflected back towards the first plate 21 where they are at least partially reconverted into (surface) acoustic waves propagating in the plate 21 towards the receiver 4 where they finally are detected. It is noted that according to the embodiment of Figure 1 the sensor device comprises only one receiver. However, other arrangements are possible as discussed below.

The signal generated by the receiver 4 depends on the properties of the interfaces between plate 21 and the flexible tube 100 as well as on the properties of the interface between the flexible tube and a medium (not shown) flowing within the tube 100. Therefore, if a coating develops at the inner surface of the flexible tube 100 the receiver signal will change such that a change in the receiver signal indicates a change of the coating properties. In other words, using the receiver signal (in particular after having calibrated the sensor device 1) the coating of the inner surface of the flexible tube can be detected and properties of the coating derived. The working principle of the sensor device will be explained in more detail with respect to the other embodiments.

Figure 2 illustrates another embodiment of the sensor device according to the invention, wherein again the support 2 of the sensor device comprises two plates 21, 22 which are in contact with an outer surface of a flexible tube 100. It is noted, that although the support 2 comprises two plates, it is also possible to use differently formed support parts, for example, half shells could be used instead of plates.

In contrast to Figure 1, the sensor device according to Figure 2 comprises a first and a second receiver 4a, 4b, wherein the first receiver 4a is arranged on the first plate 21 and the transmitter 3 and the second receiver 4b are disposed on the same plate 22. In particular, the transmitter 3 and the second receiver 4b are arranged in such a way that they lie in a plane which is spanned by the longitudinal axis and a radius of the flexible tube 100. However, the first receiver 4a is located with a distance to the transmitter 3 (with respect to the longitudinal axis of the flexible tube 100). In particular, the first receiver 4a is arranged with respect to the transmitter 3 and the second receiver 4b in such a way that it is located essentially in the middle between the transmitter 3 and the second receiver 4b, i.e. a connecting line between the transmitter 3 and the first receiver 4a has essentially the same length as a connecting line between the first receiver 4a and the second receiver 4b. If a coating develops at the inner surface 1001 of the flexible tube 100 both the signal of the first and the second receiver 4a, 4b will change.

Instead of using a second receiver 4b, the support may comprise reflecting means for reflecting acoustic waves generated by the transmitter. The transmitter 3 may further be configured in the form of a combined transmitter/receiver device that can be operated as transmitter as well as receiver such that waves reflected by the reflecting means can be detected by the transmitter/receiver device.

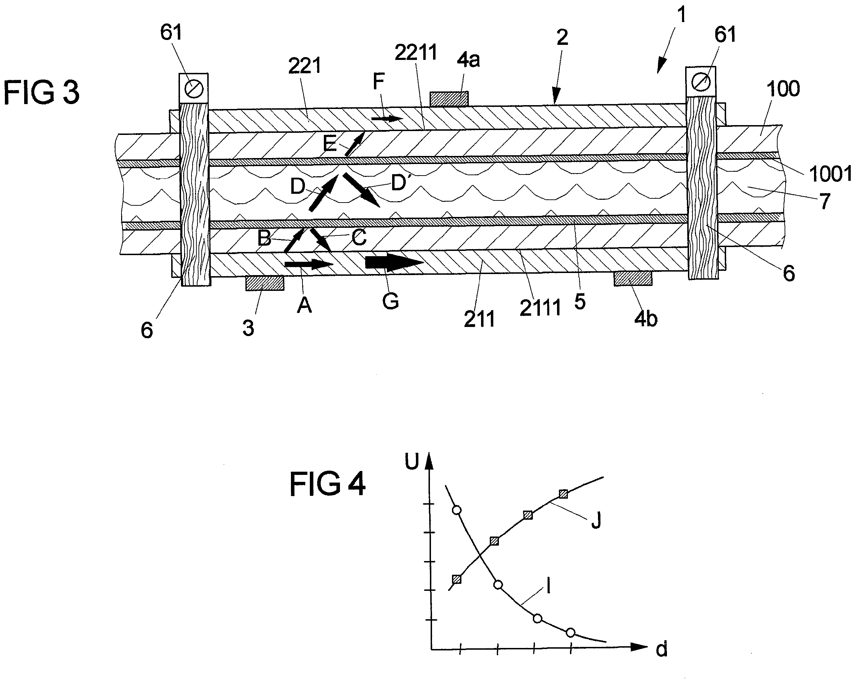

Figure 3 shows a similar arrangement as Figure 2, wherein, however, a coating 5 is present at the inner surface 1001 of the flexible tube 100 through which flows a medium in the form of a liquid 7. Furthermore, the two parts of support 2 are constructed in the form of two half shells 211, 221.

The sensor device 1 further comprises attachment means in the form of two clamps 6 that enclose an outer surface of the half shells 211, 221, wherein the clamps 6 are tightened by screws 61. By means of the clamps 6 the half shells 211, 221 are attached (clamped) to the flexible tube 100 such that an inner surface 2111, 2211 of each one of the half shells 211, 221 bears against an outer surface of the flexible tube 100.

The transmitter 3 excites acoustic waves in the half shell 211 (indicated by arrow "A"). However, a part of the acoustic waves A is converted into acoustic waves B in a side wall of the flexible tube 100. A portion of the mode converted acoustic waves B is reflected at the interface between the flexible tube 100 and the coating 5 (arrow "C"). Mode conversion between the half shell 211 and the flexible tube 100 in particular occurs if the speed velocity in the flexible tube is smaller than the speed velocity in the half shell 211 and if the flexible tube has a relatively small stiffness.

Further, a part of the acoustic waves propagating in the flexible tube 100 is converted into volume sound waves D in the liquid 7, wherein a part of these sound waves is reflected towards the half shell 211 at the interface between the liquid 7 and the coating 5 on the second half shell 221 (arrow "D'"). Another part of the sound waves D, however, is reconverted into acoustic waves in the flexible tube (arrow "E") and finally reconverted into acoustic waves F in the second half shell 221.

The acoustic waves F are then received by the first receiver 4a and a corresponding signal is generated by the first receiver 4a upon receipt of the acoustic waves F. The acoustic waves C, D', which are reflected back towards the first half shell 211, are reconverted into (surface) acoustic waves in the first half shell 211 and propagate towards the second receiver 4b in the half shell 211 (indicated by arrow "G"). Thus, the second receiver 4b receives acoustic waves A, which travel directly from the transmitter to the second receiver in the half shell 211, as well as reflected waves, which at least partially might interfere with one another such that a superposition of a plurality of acoustic wave contributions arrives at the second receiver 4b.

For example, the different fractions (direct and indirectly propagating toward the receivers) of the acoustic waves received by the first and the second receiver 4a, 4b could be identified in the respective receiver signals such that, for example, only the properties (e.g. the amplitude and the time response) of a certain acoustic wave fraction are contemplated (in particular, the wave fraction is monitored chronologically). For example, the time response of the amplitude of the acoustic waves A travelling directly from the transmitter 3 to the second receiver 4b could be monitored. An example of how the amplitude of a certain fraction of the signal generated by the first and the second receiver 4a, 4b upon receipt of acoustic waves evoked by the transmitter 3 is given in Figure 4. The amplitude U of the same fraction of acoustic waves arriving at the first and the second receiver, respectively, is measured for different coating thicknesses d. As can be seen, the amplitude evaluated from the signal of the first receiver drops with increasing thickness of the coating (curve I), wherein the amplitude of the signal generated by the second receiver 4b (curve J) increases with increasing thickness d. Therefore, a certain amplitude of the signals generated by the first and the second receiver corresponds to a certain coating thickness such that evaluating the receiver signals (e.g. determining their amplitudes) allows to deduce the coating thickness.

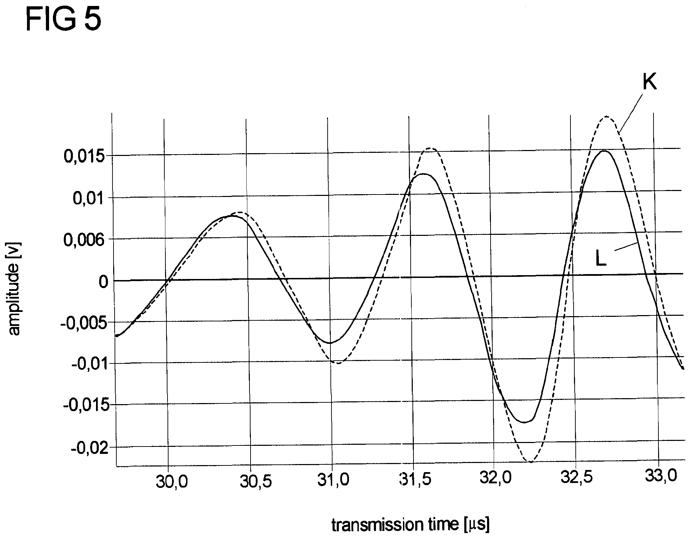

A typical sensor signal is shown in Figure 5, wherein a sensor device according to the invention was attached to a flexible tube (corresponding to the configuration of Figure 3) and the receiver signal at the first receiver 4a was monitored over time for the situation that i) no coating is present (curve K) and ii) that a coating is present on the inner surface of the flexible tube (curve L). As can be seen, both, the amplitude of the receiver signal and the time response (transmission time) is modified if a coating is present.

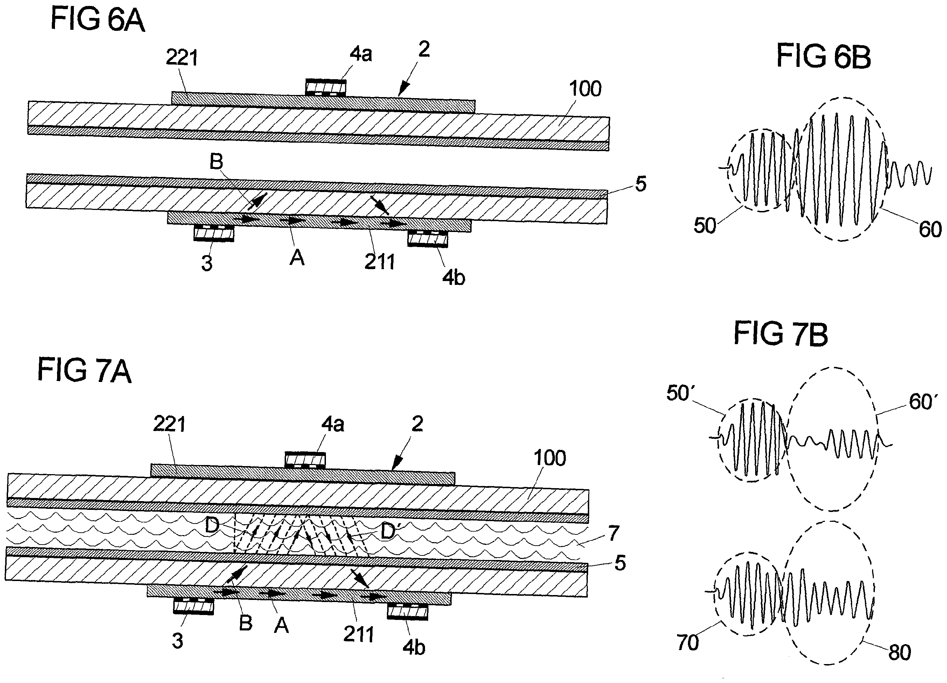

The influence of mode conversion between surface acoustic waves propagating in the support and the medium flowing in the flexible hollow element on the receiver signal is illustrated in Fig. 6A, 6B and 7A, 7B. Figure 6A depicts a sensor device corresponding to the sensor device of Fig. 3, wherein a coating 7 is present at the inner surface of the flexible tube 100. However, according to Fig. 6A, no medium is located within the interior of the flexible tube 100 such that no sound waves are created within the interior of the tube 100 and subsequently no acoustic waves arrive at the first receiver 4a.

Figure 6B illustrates a typical signal generated by the second receiver 4b. The signal comprises a first fraction (wave group) 50 resulting from acoustic waves A propagating directly from the transmitter 3 to the second receiver 4b. The receiver signal further comprises a second fraction relating to a second fraction 60 of the evoked acoustic waves resulting from waves coupled into the side wall of the flexible tube and reflected at the interface between the side wall of the flexible tube and the interior space of the flexible tube, the interior space being delimited by the side wall of the flexible tube.

Figures 7A, 7B relate to the situation that a liquid 7 fills the interior space of the flexible hollow element. In this case a portion of the acoustic waves B created in the side wall of the flexible tube 100 is converted into volume sound waves D in the liquid 7 which are partially detected by the first receiver 4a and partially reflected towards the first receiver 4a.

The corresponding receiver signals are shown in Figure 7B, wherein the upper illustration shows the signal of the second receiver 4b and the lower illustration shows the signal of the first receiver 4a. In comparison to the signal of the second receiver shown in Fig. 6B, the second fraction 60' of the signal is much lower due to the fact that the amount of acoustic wave energy reflected at the interface between the side wall of the flexible tube and the interior space of the flexible tube is lower as a large fraction of the acoustic waves is converted into sound waves in the medium 7. Therefore, the amount of acoustic wave energy arriving at the first receiver 4a is much higher resulting in a first signal fraction 70. Another signal fraction 80 develops from reflected waves.

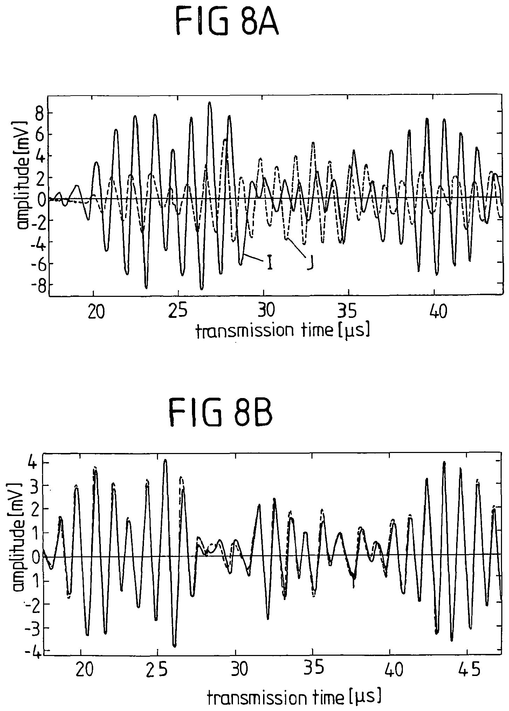

The sensor signals change if a coating is present, which is illustrated in Figures 8A to 8D, wherein Figures 8A and 8B show signals (amplitude vs. time) generated by the first receiver 4a for the case that a gelatine coating (Figure 8A) and a $CaCO_3$ coating is present (Fig.

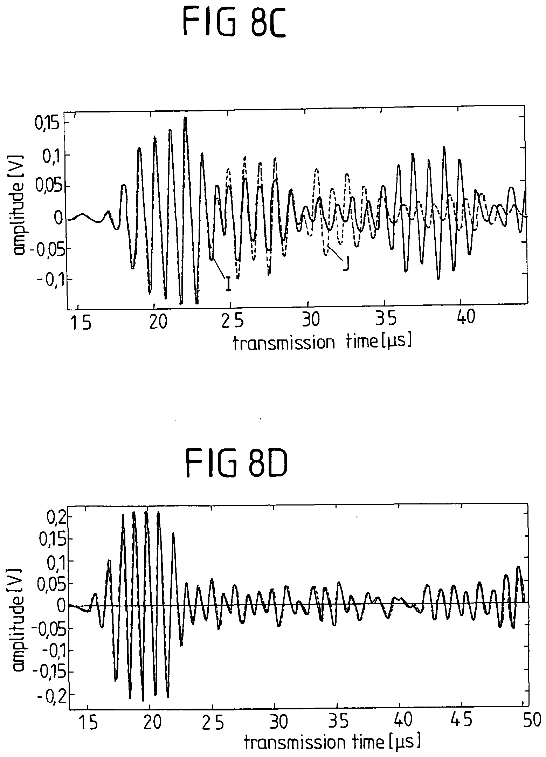

8B). Figures 8C and 8D show the signal generated by the second receiver 4b for the gelatine coating (Figure 8C) and he CaCO$_3$ coating (Figure 8D) is present. As can be derived from Figures 8A to 8D the receiver signals change if a coating is present (no coating: curves I, coating: curves J), although the change is hardly visible in the Figures related to the CaCO$_3$ coating.

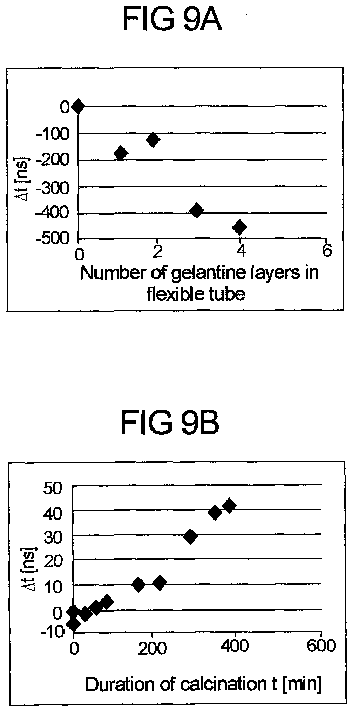

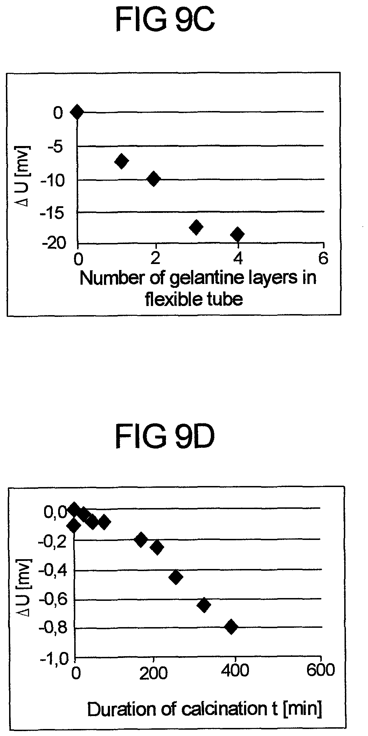

Figures 9A to 9D show an evaluation of the signal generated by the first receiver, wherein the transmission time (Figures 9A and 9B) and the amplitude (Figures 9C and 9D) of a wave fraction have been extracted from the receiver signals illustrated in Figures 8A to 8D. As can be seen, in the case of the gelatine coating, the transmission time and the amplitude of the receiver signal drop with increasing coating thickness, wherein the transmission time and the amplitude are shown for different numbers of gelatine layers and in dependence of the calcination time (i.e. for how long a CaCO$_3$ solution was pumped through the flexible tube), respectively. In the case of the CaCO$_3$ coating, the amplitude drops as well, however, the transmission time increases with increasing coating thickness such that combining both the amplitude and the transmission time values permits to distinguish different coating materials.

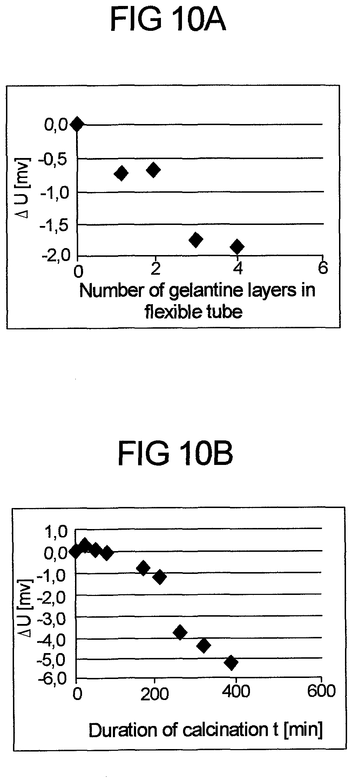

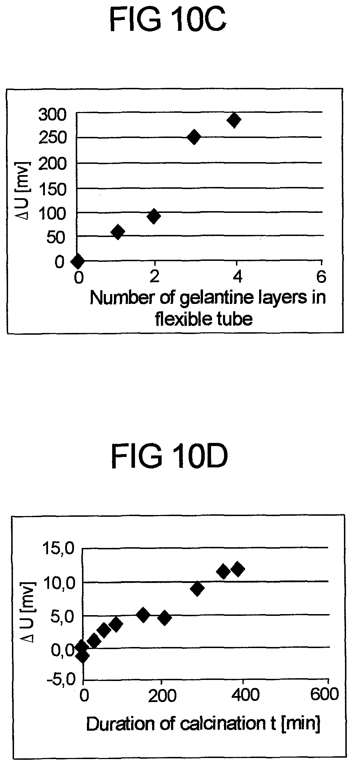

Figure 10A to 10D relate to receiver signals generated by the second receiver, wherein Figures 10A and 10B show the amplitude of a first fraction of the signal (related to a first wave group arriving at the receiver as, for example, wave group 50 shown in Figure 6B). Figures 10C and 10D show the amplitude of a second fraction of the signal (related to a second wave group arriving at the receiver as, for example, wave group 60 shown in Figure 6B).

In particular, a combination of the receiver signals of the first and the second receivers allows to unambiguously determine whether or not a coating is present and - if the sensor device is calibrated - to determine the thickness of the coating.

**Claims**

1. A sensor device for investigating a flexible hollow element having an inner surface for interfacing a liquid or a soft medium, the sensor device comprising:

   - a support (2) to be attached to the flexible hollow element (100);
   - attachment means (6) for attaching the support (2) to the flexible hollow element (100);
   - at least one transmitter (3) arranged on the support (2) for exciting acoustic waves in the support (2);
   - at least one receiver (4, 4a, 4b) arranged on the support (2) for receiving acoustic waves evoked by the transmitter (3), wherein
   - a signal generated by the receiver (4, 4a, 4b) upon receipt of acoustic waves evoked by the transmitter (3) can be evaluated to verify whether a coating (5) is present between the inner surface (1001) of the flexible hollow element (100) and the medium (7) and/or if a coating (5) is present to determine properties of the coating,

**characterized in that**

   - the attachment means (6) are configured to allow a force and/or a form closed connection of the support (2) to the flexible hollow element (100), wherein
   - the transmitter (3) is configured to excite Lamb waves or Lamb-Rayleigh waves in the support (2), wherein
   - the transmitter (3) and the receiver (4, 4a, 4b) are arranged in a distance from one another with respect to the main extension direction of the support (2), wherein
   - the support (2) consists of a non-piezoelectric material, and wherein
   - the attachment means (6) are configured for detachably fixing the support (2) to the flexible hollow element (100).

2. The sensor device as claimed in claim 1, **further comprising** evaluation means configured and constructed for evaluating a signal generated by the receiver (4, 4a, 4b) upon receipt of acoustic waves evoked by the transmitter (3) and for verifying whether a coating (5) is present between the inner surface (1001) of the flexible hollow element (100) and the medium (7) and/or if a coating (5) is present for determining properties of the coating.

3. The sensor device as claimed in one of the preceding claims, **wherein** the thickness of the support (2) is in the range between 0.1 mm to 10 mm.

4. The sensor device as claimed in one of the preceding claims, **wherein** the support (2) is formed in such a way that it at least partially encloses the flexible hollow element (100) when the support (2) is mounted to the flexible hollow element (100).

5. The sensor device as claimed in one of the preceding claims, **wherein** the support (2) comprises at least one half shell on which the transmitter (3) and/or the receiver (4, 4a, 4b) is arranged.

6. The sensor device as claimed in one of the preceding claims, further comprising reflecting means for reflecting acoustic waves in the support.

7. The sensor device as claimed in one of the preceding claims, **wherein** the transmitter (3) and the receiver (4, 4a, 4b) are arranged in a row along the main extension direction of the support (2).

8. The sensor device as claimed in one of the preceding claims, **wherein** the transmitter (3) and the receiver (4, 4a, 4b) are arranged on a surface of the support (2) that faces away from the flexible hollow element (100) when the support (2) is mounted to the flexible hollow element (100).

9. The sensor device as claimed in one of the preceding claims, **wherein** the attachment means (6) comprise at least one fastener for clamping the support (2) to the flexible hollow element (100).

10. The sensor device as claimed in one of the preceding claims, **wherein** the support (2) comprises or consists of at least one of the group of a metal, a ceramic, a glass and a polymer material.

11. A method for investigating a flexible hollow element having an inner surface for interfacing a liquid or a soft medium, the method comprising the steps of:

a) arranging a sensor device (1) as claimed in one of the preceding claims on a flexible hollow element (100) by detachably fixing the support (2) of the sensor device (1) to the flexible hollow element (100), the sensor device comprising a transmitter (3) and a receiver (4, 4a, 4b) arranged in a distance from one another with respect to the main extension direction of the support (2);
b) exciting acoustic waves in the form of Lamb waves or Lamb-Rayleigh waves in the support (2) using a transmitter (3);
c) receiving acoustic waves evoked by the transmitter (3) by the receiver (4, 4a, 4b);
d) evaluating a signal generated by the receiver (4, 4a, 4b) upon receipt of acoustic waves evoked by the transmitter (3) in order to verify whether a coating (5) is present on the inner surface of the hollow element (100) and/or if a coating is present to determine properties of the coating.

12. The method as claimed in claim 11, **further comprising**
converting at least a part of the energy associated with the acoustic waves excited in the support (2) into volume sound waves of the medium (7) interfacing the inner surface of the flexible hollow element (100); and
reconverting at least a part of the energy associated with the volume sound waves into acoustic wave energy of the support (2) thereby generating acoustic waves in the support (2),

13. The method as claimed in one of the claims 11 or 12, **wherein** evaluating the signal generated by the receiver (4, 4a, 4b) comprises evaluating the amplitude and the time response of the signal.

## Patentansprüche

1. Sensorvorrichtung zur Untersuchung eines flexiblen Hohlelements mit einer inneren Oberfläche für Kontakt mit einem flüssigen oder weichen Medium, wobei die Sensorvorrichtung Folgendes umfasst:

- einen Träger (2), der an dem flexiblen Hohlelement (100) zu befestigen ist;
- Befestigungsmittel (6) zum Befestigen des Trägers (2) am flexiblen Hohlelement (100);
- zumindest einen am Träger (2) angeordneten Sender (3) zum Erregen von akustischen Wellen im Träger (2);
- zumindest einen am Träger (2) angeordneten Empfänger (4, 4a, 4b) zum Empfangen von akustischen Wellen, die durch den Sender (3) hervorgerufen wurden, wobei
- ein Signal, erzeugt durch den Empfänger (4, 4a, 4b) bei Empfang von akustischen Wellen, die durch den Sender (3) hervorgerufen wurden, evaluiert werden kann, um zu überprüfen, ob eine Beschichtung (5) zwischen der inneren Oberfläche (1001) des flexiblen Hohlelements (100) und dem Medium (7) vorhanden ist und/oder ob eine Beschichtung (5) vorhanden ist, um die Eigenschaften der Beschichtung zu bestimmen,

**dadurch gekennzeichnet, dass**

- die Befestigungsmittel (6) dazu ausgelegt sind, eine kraft- und/oder eine formschlüssige Verbindung des Trägers (2) mit dem flexiblen Hohlelement (100) zu ermöglichen, wobei
- der Sender (3) dazu ausgelegt ist, Lamb-Wellen oder Lamb-Rayleigh-Wellen im Träger (2) zu erregen, wobei
- der Sender (3) und der Empfänger (4, 4a, 4b) in einem Abstand voneinander angeordnet sind, bezüglich der Hauptausdehnungsrichtung des Trägers (2), wobei
- der Träger (2) aus einem nicht-piezoelektrischen Material besteht, und wobei
- die Befestigungsmittel (6) dazu ausgelegt sind, den Träger (2) lösbar am flexiblen Hohlelement (100) zu befestigen.

2. Sensorvorrichtung nach Anspruch 1, ferner umfassend Evaluierungsmittel, ausgelegt und aufgebaut zum Evaluieren eines durch den Empfänger (4, 4a, 4b) bei Empfang von akustischen Wellen, die durch den Sender (3) hervorgerufen wurden, erzeugten Signals und zum Überprüfen, ob eine Beschichtung (5) zwischen der inneren Oberfläche (1001) des flexiblen Hohlelements (100) und dem Medium (7) vorhanden ist und/oder falls eine Beschichtung (5) vorhanden ist, um Eigenschaften der Beschichtung zu bestimmen.

3. Sensorvorrichtung nach einem der vorhergehenden Ansprüche, wobei die Dicke des Trägers (2) im Bereich zwischen 0,1 mm und 10 mm liegt.

4. Sensorvorrichtung nach einem der vorhergehenden Ansprüche, wobei der Träger (2) in einer Weise gebildet ist, dass er das flexible Hohlelement (100) zumindest teilweise umschließt, wenn der Träger (2) am flexiblen Hohlelement (100) montiert ist.

5. Sensorvorrichtung nach einem der vorhergehenden Ansprüche, wobei der Träger (2) zumindest eine Halbschale umfasst, auf der der Sender (3) und/oder der Empfänger (4, 4a, 4b) angeordnet ist.

6. Sensorvorrichtung nach einem der vorhergehenden Ansprüche, ferner umfassend Reflektiermittel zum Reflektieren von akustischen Wellen im Träger.

7. Sensorvorrichtung nach einem der vorhergehenden Ansprüche, wobei der Sender (3) und der Empfänger (4, 4a, 4b) in einer Reihe entlang der Hauptausdehnungsrichtung des Trägers (2) angeordnet sind.

8. Sensorvorrichtung nach einem der vorhergehenden Ansprüche, wobei der Sender (3) und der Empfänger (4, 4a, 4b) auf einer Oberfläche des Trägers (2) angeordnet sind, die vom flexiblen Hohlelement (100) weg zeigt, wenn der Träger (2) am flexiblen Hohlelement (100) montiert ist.

9. Sensorvorrichtung nach einem der vorhergehenden Ansprüche, wobei die Befestigungsmittel (6) zumindest ein Befestigungselement zum Anklemmen des Trägers (2) am flexiblen Hohlelement (100) umfassen.

10. Sensorvorrichtung nach einem der vorhergehenden Ansprüche, wobei der Träger (2) zumindest eines aus der Gruppe aus einem Metall, einer Keramik, einem Glas und einem Polymermaterial umfasst oder daraus besteht.

11. Verfahren zur Untersuchung eines flexiblen Hohlelements mit einer inneren Oberfläche für Kontakt mit einem flüssigen oder weichen Medium, wobei das Verfahren die folgenden Schritte umfasst:

a) Anordnen einer Sensorvorrichtung (1) nach einem der vorhergehenden Ansprüche an einem flexiblen Hohlelement (100) durch lösbares Befestigen des Trägers (2) der Sensorvorrichtung (1) an dem flexiblen Hohlelement (100), wobei die Sensorvorrichtung einen Sender (3) und einen Empfänger (4, 4a, 4b) umfasst, die in einem Abstand voneinander bezüglich der Hauptausdehnungsrichtung des Trägers (2) angeordnet sind;
b) Erregen akustischer Wellen in der Form von Lamb-Wellen oder Lamb-Rayleigh-Wellen im Träger (2) unter Verwendung eines Senders (3);
c) Empfangen akustischer Wellen, die durch den Sender (3) hervorgerufen wurden, durch den Empfänger (4, 4a, 4b);
d) Evaluieren eines durch den Empfänger (4, 4a, 4b) bei Empfang akustischer Wellen, die durch den Sender (3) hervorgerufen wurden, erzeugten Signals, um zu überprüfen, ob eine Beschichtung (5) auf der inneren Oberfläche des Hohlelements (100) vorhanden ist und/oder ob eine Beschichtung vorhanden ist, um die Eigenschaften der Beschichtung zu bestimmen.

12. Verfahren nach Anspruch 11, das ferner Folgendes umfasst:

Umwandeln zumindest eines Teils der Energie in Verbindung mit den im Träger (2) erregten akustischen Wellen in Volumenschallwellen des Mediums (7) in Kontakt mit der inneren Oberfläche des flexiblen Hohlelements (100); und Wiederumwandeln zumindest eines Teils der Energie in Verbindung mit den Volumenschallwellen in akustische Wellenenergie des Trägers (2), dabei akustische Wellen im Träger (2) erzeugend.

13. Verfahren nach einem der Ansprüche 11 oder 12, wobei Evaluieren des durch den Empfänger (4, 4a, 4b) erzeugten Signals Evaluieren der Amplitude und des Zeitverhaltens des Signals umfasst.

**Revendications**

1. Dispositif de capteur pour analyser un élément creux souple présentant une surface interne pour l'interfaçage avec un milieu liquide ou mou, le dispositif de capteur comprenant :

- un support (2) destiné à être fixé à l'élément creux souple (100) ;
- des moyens de fixation (6) pour fixer le support (2) à l'élément creux souple (100) ;
- au moins un émetteur (3) disposé sur le support (2) pour exciter des ondes acoustiques dans le support (2) ;
- au moins un récepteur (4, 4a, 4b) disposé sur le support (2) pour recevoir des ondes acoustiques émises par l'émetteur (3), dans lequel
- un signal généré par le récepteur (4, 4a, 4b) à la réception d'ondes acoustiques émises par l'émetteur (3) peut être évalué pour vérifier qu'un revêtement (5) est présent ou non entre la surface interne (1001) de l'élément creux souple (100) et le milieu (7) et/ou qu'un revêtement (5) est présent ou non pour déterminer des propriétés du revêtement,

**caractérisé en ce que**

- les moyens de fixation (6) sont configurés pour permettre une connexion par force et/ou à forme fermée du support (2) sur l'élément creux souple (100), dans lequel

- l'émetteur (3) est configuré pour exciter des ondes de Lamb et des ondes de Lamb-Rayleigh dans le support (2), dans lequel

- l'émetteur (3) et le récepteur (4, 4 , 4b) sont disposés à une distance l'un de l'autre relativement au sens d'extension principal du support (2) dans lequel

- le support (2) consiste en un matériau non piézoélectrique, et dans lequel

- les moyens de fixation (6) sont configurés pour fixer de manière détachable le support (2) à l'élément creux souple (100).

2. Dispositif de capteur selon la revendication 1, **comprenant en outre** un moyen d'évaluation configuré et construit pour évaluer un signal généré par le récepteur (4, 4a, 4b) à la réception d'ondes acoustiques émises par l'émetteur (3) et pour vérifier qu'un revêtement (5) est présent ou non entre la surface interne (1001) de l'élément creux souple (100) et le support (7) et/ou qu'un revêtement (5) est présent ou non pour déterminer des propriétés du revêtement.

3. Dispositif de capteur selon l'une des revendications précédentes, **dans lequel** l'épaisseur du support (2) est comprise dans la plage de 0,1 mm à 10 mm.

4. Dispositif de capteur selon l'une des revendications précédentes, **dans lequel** le support (2) est formé de telle sorte qu'il enferme au moins partiellement l'élément creux souple (100) quand le support (2) est monté sur l'élément creux souple (100).

5. Dispositif de capteur selon l'une des revendications précédentes, **dans lequel** le support (2) comprend au moins une demi-coque sur laquelle l'émetteur (3) et/ou le récepteur (4, 4a, 4b) sont disposés.

6. Dispositif de capteur selon l'une des revendications précédentes, comprenant en outre des moyens de réflexion pour réfléchir des ondes acoustiques dans le support.

7. Dispositif de capteur selon l'une des revendications précédentes, **dans lequel** le support (2) comprend au moins une demi-coque sur laquelle sont disposés l'émetteur (3) et/ou le récepteur (4, 4a, 4b).

8. Dispositif de capteur selon l'une des revendications précédentes, **dans lequel** l'émetteur (3) et le récepteur (4, 4a, 4b) sont disposés sur une surface du support (2) qui fait dos à l'élément creux souple (100) quand le support (2) est monté sur l'élément creux souple (100).

9. Dispositif de capteur selon l'une des revendications précédentes, **dans lequel** les moyens de fixation (6) comprennent au moins une fixation pour serrer le support (2) sur l'élément creux souple (100).

10. Dispositif de capteur selon l'une des revendications précédentes, **dans lequel** le support (2) comprend ou consiste en au moins un du groupe d'un métal, d'une céramique, d'un verre et d'un matériau polymère.

11. Procédé d'analyse d'un élément creux souple présentant une surface interne pour l'interfaçage avec un milieu liquide ou mou, le procédé comprenant les étapes suivantes :

a) la disposition d'un dispositif de capteur (1) selon l'une des revendications précédentes sur un l'élément creux souple (100) en fixant de manière détachable le support (2) du dispositif de capteur (1) sur l'élément creux souple (100), le dispositif de capteur comprenant un émetteur (3) et un récepteur (4, 4a, 4b) disposés à une distance l'un de l'autre relativement au sens d'extension principal du support (2) ,
b) l'excitation d'ondes acoustiques sous forme d'ondes de Lamb ou d'ondes de Lamb-Rayleigh dans le support (2) à l'aide d'un émetteur (3) ;
c) la réception par le récepteur (4, 4a, 4b) d'ondes acoustiques émises par l'émetteur (3) ;
d) l'évaluation d'un signal généré par le récepteur (4, 4a, 4b) à la réception d'ondes acoustiques émises par l'émetteur (3) afin de vérifier qu'un revêtement (5) est présent ou non sur la surface interne de l'élément creux (100) et/ou qu'un revêtement est présent ou non pour déterminer les propriétés du revêtement.

12. Procédé selon la revendication 11, **comprenant en outre**
la conversion d'au moins une partie de l'énergie associée aux ondes acoustiques excitées dans le support (2) en ondes sonores de volume du milieu (7) qui s'interface avec la surface interne de l'élément creux souple (100) ; et
la reconversion d'au moins une partie de l'énergie associée aux ondes sonores de volume en énergie d'ondes acoustiques du support (2) générant ainsi des ondes acoustiques dans le support (2).

13. Procédé selon l'une des revendications 11 et 12, **dans lequel** l'évaluation du signal généré par le récepteur (4, 4a, 4b) comprend l'évaluation de l'amplitude et du temps de réponse du signal.

# FIG 1

# FIG 2

FIG 3

EP 2 419 722 B1

FIG 4

FIG 5

FIG 6A

FIG 6B

FIG 7A

FIG 7B

# FIG 8A

# FIG 8B

# FIG 8C

# FIG 8D

## FIG 9A

Number of gelantine layers in
flexible tube

## FIG 9B

Duration of calcination t [min]

# FIG 9C

Number of gelantine layers in flexible tube

# FIG 9D

Duration of calcination t [min]

# FIG 10A

# FIG 10B

# FIG 10C

# FIG 10D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007029143 A2
- US 20080163700 A1
- US 5092176 A
- US 20030010125 A1